# EUROPEAN PATENT APPLICATION

(11) **EP 1 056 270 A2**
(43) Date of publication of application: **29.11.2000**
(21) Application number: 00304315.5
(22) Date of filing: 22.05.2000
(51) Int. Cl.: H04N 1/21

(54) **Digital camera system and method for displaying images via an optical viewfinder**

(30) Priority: 27.05.1999 US 318548
(71) Applicant: Hewlett-Packard Company, Palo Alto, California 94304-1112 (US)
(72) Inventor: Campell, David K., Loveland, CO 80538 (US)
(74) Representative: Jackson, Richard Eric

(57) **Abstract**

A digital camera system (70) is provided for displaying images via an optical viewfinder (82). The digital camera system (70) includes a lens (31), a conversion device (34), a display device (39), a beam splitter (85), and a housing (86). The conversion device (34) produces digital data based on light passing through the lens (31). The display device (39) produces an image based on the digital data produced by the conversion device (34). The housing (86) has a first opening, and the beam splitter (85) is positioned within a path of travel of light passing through the first opening and is positioned within a path of travel of light from the image produced by the display device (39). The light received by the beam splitter (85) is directed toward and passes through a second opening in the housing (86).

## Description

### BACKGROUND OF THE INVENTION

### FIELD OF THE INVENTION

The present invention generally relates to digital cameras and, in particular, to a system and method for utilizing an optical viewfinder to display different types of images of a scene to a user.

### RELATED ART

Most cameras include an optical viewfinder that can be used to view an image of a scene. A user generally uses the optical viewfinder to properly point the camera before taking a picture. Once the camera is properly positioned, a picture is taken by capturing light that is being received through the lens of the camera.

In digital cameras, light is captured by exposing a charge coupled device (CCD) to the light received by the lens. Through techniques well known in the art, the CCD converts the light into electrical or data signals that can be stored in memory or otherwise processed as desired. Furthermore, in addition to conventional optical viewfinders, most digital cameras also include a liquid crystal display (LCD) capable of receiving the data signals produced by the CCD and of displaying images defined by the data signals. Consequently, a user can position the camera by either viewing the image produced by the optical viewfinder or by viewing the image produced by the LCD. In addition, the user can also use the LCD to view pictures previously taken, if desired.

However, separately providing an optical viewfinder and an LCD increases the size of digital cameras. This is usually an undesirable effect since larger sized cameras are typically more difficult to handle and transport. Furthermore, the LCD is sometimes difficult to view, especially when the surroundings of the camera are bright (*e*.*g*., when the LCD is exposed to direct sunlight). Therefore, even though digital cameras provide the user with the option of using the LCD to position the camera, many users choose to use conventional optical viewfinders, especially in bright conditions.

Thus, a heretofore unaddressed need exists in the industry for providing a more compact digital camera. It is desirable for the LCD of the digital camera to be easily viewed in different types of conditions so that users will not be deterred from utilizing the LCD due to the conditions of the surroundings.

### SUMMARY OF THE INVENTION

The present invention overcomes the inadequacies and deficiencies of the prior art as discussed hereinbefore. Generally, the present invention provides a system and method for displaying images received by a digital camera.

The present invention utilizes a housing, a first lens, a conversion device, a display device, and a beam splitter. The conversion device produces digital data based on light passing through the first lens. The display device produces an image based on the digital data produced by the conversion device. The housing has a first opening, and the beam splitter is positioned within a path of travel of light passing through the first opening and is positioned within a path of travel of light from the image produced by the display device. At least a portion of the light received by the beam splitter is directed to and passes through a second opening in the housing.

In accordance with another feature of the present invention, the light passing through the first opening and the light from the image produced by the display device are incident on the beam splitter and pass through a second opening in the housing. If desired, the light passing through the first opening and the light from the image produced by the display device can simultaneously pass through the second opening.

In accordance with another feature of the present invention, the light passing through the first opening is selectively prevented from reaching the beam splitter.

The present invention can also be viewed as providing a method for displaying images by a digital camera. Briefly described, the method can be broadly conceptualized by the following steps: receiving light via a first opening in the digital camera; defining an image in digital data; displaying the image based on the digital data; transmitting the light received in the receiving step through a second opening in the digital camera; and transmitting light from the image through the second opening.

Other features and advantages of the present invention will become apparent to one skilled in the art upon examination of the following detailed description, when read in conjunction with the accompanying drawings. It is intended that all such features and advantages be included herein within the scope of the present invention and protected by the claims.

### BRIEF DESCRIPTION OF THE DRAWINGS

The invention can be better understood with reference to the following drawings. The elements of the drawings are not necessarily to scale relative to each other, emphasis instead being placed upon clearly illustrating the principles of the invention. Furthermore, like reference numerals designate corresponding parts throughout the several views.
FIG. 1 is a diagram illustrating a conventional digital camera system.
FIG. 2 is a diagram illustrating a detailed view of the display device shown in FIG. 1.
FIG. 3 is a diagram illustrating a digital camera system in accordance with the present invention.
FIG. 4 is a diagram of the digital camera system of FIG. 3 when two prisms are utilized as a beam splitter.
FIG. 5 is a diagram illustrating the digital camera system of FIG. 3 when the shutter is in a closed position.
FIG. 6A is a front view of a housing for the digital camera system of FIG. 3.
FIG. 6B is a back view of the housing of FIG. 6A.
FIG. 7 is a diagram illustrating a controller and a user interface connected to components of the system shown in FIG. 3.
FIG. 8 is a diagram illustrating the digital camera system of FIG. 3 when the display device is not producing an image.
FIG. 9 is a diagram illustrating the digital camera system of FIG. 3 when the beam splitter has been moved to another position.
FIG. 10 is a diagram illustrating another embodiment of the present invention.
FIG. 11 is a diagram illustrating the digital camera system of FIG. 10 when the minor has been moved so that only light from the display device is received by the eyepiece lens.
FIG. 12 is a diagram illustrating the digital camera system of FIG. 10 when the beam splitter has been moved so that only light from the display device is received by the eyepiece lens.

### DETAILED DESCRIPTION OF THE PREFERRED EMBODIMENT

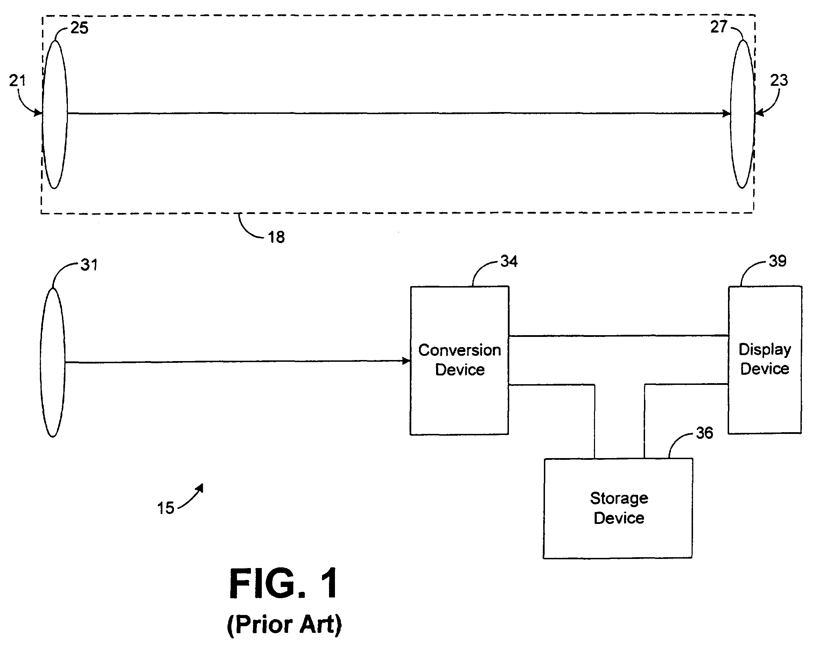

FIG. 1 depicts a conventional digital camera system 15. The system 15 includes an optical viewfinder 18 to allow a user to properly position the camera system 15 before taking a picture. Light from a scene enters the optical viewfinder 18 at one end 21 of the optical viewfinder 18 and passes out of the optical viewfinder 18 at an opposite end 23. The optical viewfinder 18 often includes a lens 25 and an eyepiece lens 27 respectively located at each end 21 and 23 to form an image of the light as it passes through the viewfinder 18. Optical viewfinders 18 also often include prisms and/or minors to orient the image correctly for the user. These prisms and/or mirrors are not shown in FIG. 1 for simplicity but should be apparent to one skilled in the art.

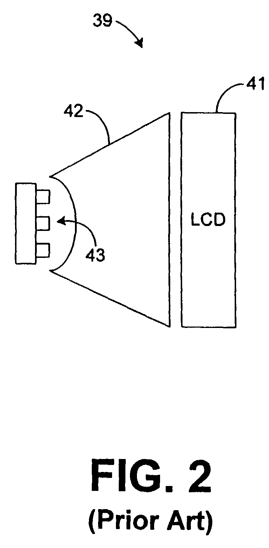

Another lens 31 also receives light from a scene. The end 21 of the viewfinder 18 and the lens 31 are usually positioned such that the viewfinder 18 and the lens 31 receive light from the same scene (*i*.*e*., the lenses 25 and 31 are pointed in the same general direction). Light passes through the lens 31 and is imaged by a conversion device 34, such as a charge coupled device (CCD), for example. Through known techniques, the conversion device 34 converts the light received from the lens 31 into electrical or data signals. These data signals are transmitted to a storage device 36 and/or a display device 39. As shown by FIG. 2, the display device 39 usually includes a liquid crystal display (LCD) 41 that receives light through a reflector 42 from multiple light emitting diodes (LEDs) 43 and, through known techniques, produces an image defined by the data signals transmitted to the display device 39.

To take a picture, data from the data signals currently transmitted from the conversion device 34 is stored in the storage device 36. The data stored in the storage device 36 for each picture defines an image of the scene viewed by the lens 31 when the respective picture was taken. When desired, the data of any of the pictures may be transmitted to the display device 39, which displays the image of the picture through known techniques. Alternatively, the display device 39 can receive data signals from the conversion device 34 to display an image of the scene currently viewed by the lens 31. Therefore, a user may view the display device 39 to see either an image of the scene currently viewed by the lens 31 or an image of a picture already taken by the camera system 15. Consequently, to properly position the camera system 15, the user may either look through the viewfinder 18 to see an image of the scene or may view the display device 39, when the display device 39 is receiving signals directly from the conversion device 34.

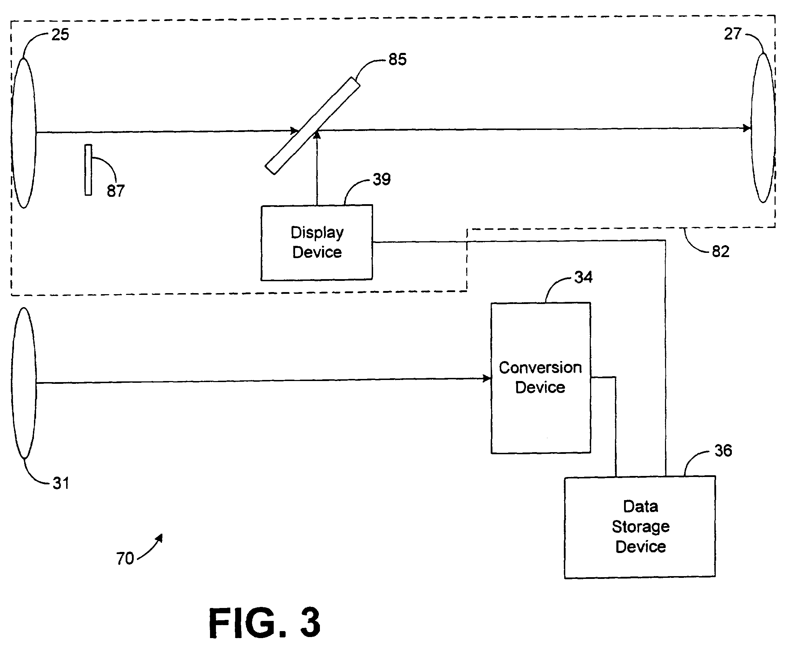

FIG. 3 depicts a camera system 70 in accordance with the present invention. The system 70 includes a lens 31 that receives light from a scene. The light passes through lens 31 and is received by conversion device 34. The conversion device 34, through conventional techniques, produces data signals based on the light received by the conversion device 34. As an example, the conversion device 34 may be a charge coupled device (CCD), which is a well known device of the prior art.

A data storage device 36, such as a memory card, for example, is coupled to the conversion device 34 and receives the data signals from the conversion device 34. At selected times (*i*.*e*., when taking a picture), the storage device 36 is designed to store the data defined by the data signals currently received from the conversion device 34. Therefore, as known in the art, the data stored in the storage device 36 defines the pictures that are taken by the camera system 70.

The user preferably uses the optical viewfinder 82 to position the camera system 70 before taking a picture. In this regard, the optical viewfinder 82 produces an image of the scene viewed by the lens 25. The user can view this image to determine whether the optical viewfinder 82, is properly positioned. There are several configurations of the camera system 70, which will be discussed in detail hereinafter, that may be employed to display an image of the scene to the user.

If the user wishes to view the light passing through the lens 25, the configuration of FIG. 3 may be employed. In this regard, a beam splitter 85 is preferably positioned such that at least a portion of the light received by lens 25 passes through the beam splitter 85 and is incident on lens 27. Therefore, by looking through the eyepiece lens 27, the user sees an image of the light received by lens 25.

A display device 39, such as the liquid crystal display (LCD) 41 and the light emitting diodes (LEDs) 43 depicted in FIG. 2, is preferably positioned within the optical viewfinder 82 so that the user may see an electronic image of the scene via the viewfinder 82, if desired. In this regard, the display device 39 is coupled to both the conversion device 34 and the storage device 36. When the user wishes to see an electronic image of the light currently received by the lens 31, data signals transmitted from the conversion device 34 to the display device 39 are used by the display device 39 to produce an image. The image produced by the display device 39 is transmitted toward beam splitter 85. At least a portion of the light transmitted by the display device 39 reflects off of the beam splitter 85 toward lens 27. Therefore, the user may look through lens 27 to view the image produced by the display device 39.

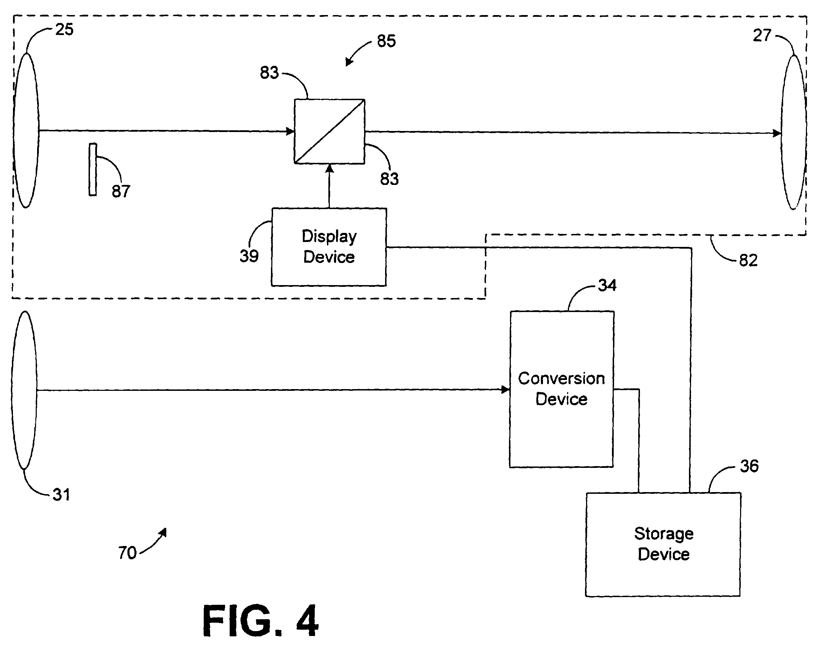

Moreover, the beam splitter 85 is capable of receiving an image from display device 39 and/or an image from lens 25 and of directing either or both of these images in the same general direction (*i*.*e*., toward lens 27). A "beam splitter" is a well known term describing a device that both allows light to pass through the device and that reflects light. Various designs of beam splitter 85 may be employed in the present invention. For example, the beam splitter 85 may be a single piece of transparent material, as shown by Fig. 3, having an index of refraction different than its surroundings. Alternatively, the beam splitter 85 may be comprised of multiple components. As an example, FIG. 4 shows an embodiment where the beam splitter 85 is defined by multiple prisms 83. Various other configurations of beam splitter 85 may be employed as long as both the light from lens 25 and the light from display device 39 can be directed toward lens 27 by the beam splitter 85.

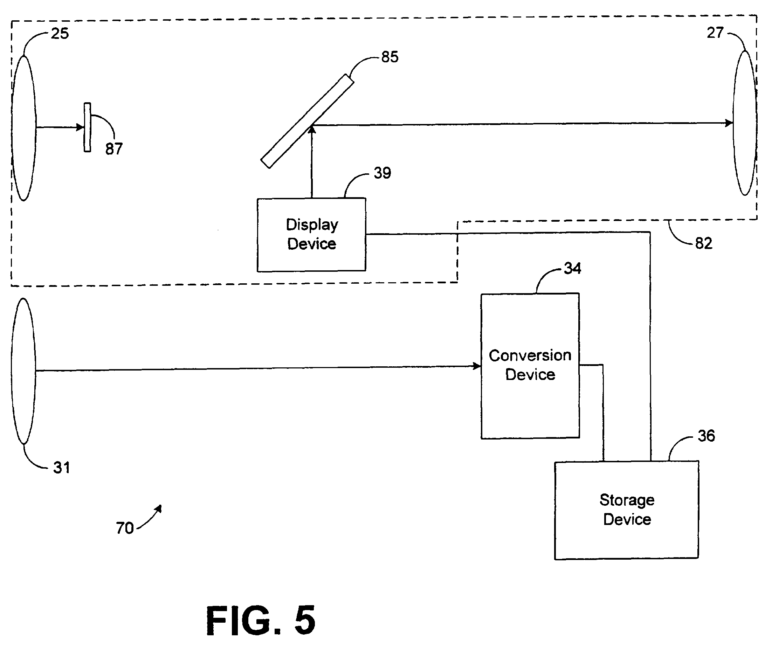

To prevent interference with the user's view of the image produced by display device 39, the viewfinder 82 preferably employs a shutter 87. When it is desirable for the user to only view images produced by display device 39 and not by lens 25, the shutter 87 is preferably positioned in a closed position, as shown by FIG. 5. In a closed position, the shutter 87 is positioned within the path of travel of the light from lens 25 and, therefore, blocks this light from traveling toward beam splitter 85. Consequently, only the light from the display device 39 is incident on the beam splitter 85, and as a result, the beam splitter 85 only directs light from the display device 39 toward lens 27. Therefore, the user only sees light from the display device 39 when the shutter 87 is in the closed position.

When is it desirable for the user to view the light from lens 25, the shutter 87 is preferably positioned in an open position, as shown by FIG. 3. To place the shutter 87 in an open position, the shutter 87 is moved out of the path of the light passing through lens 25. Therefore, the light is allowed to pass by the shutter 87 and be received by the beam splitter 85, which directs the light toward lens 27. As a result, the user can look through the lens 27 and see light from lens 25.

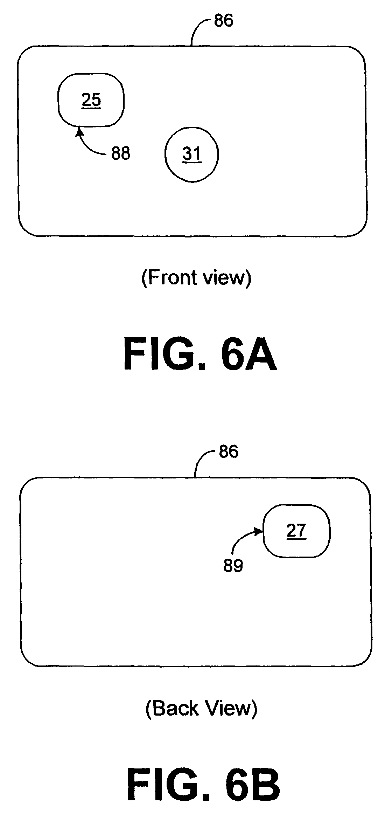

As shown by FIGS. 6A and 6B, the system 70 is preferably included within a housing 86. The housing 86 preferably includes two openings 88 and 89 for the optical view finder 82, and lenses 25 and 27 are respectively positioned within these openings 88 and 89 in the preferred embodiment, similar to housings of conventional cameras. Therefore, light passing through the openings 88 and 89 also respectively passes through lenses 25 and 27. As a result, lenses 25 and 27 serve as optical interfaces to the viewfinder 82 in that light is allowed to pass into and out of the viewfinder 82 via the lenses 25 and 27. Since the display device 39 is within the housing 86 and since the user typically places his eye close to the eyepiece lens 27, the image produced by the display device 39 is not substantially exposed to light outside of the viewfinder 82, and the image produced by the display device 39 is, therefore, less affected by the surrounding conditions than the image produced by the display device 39 of conventional system 15.

In situations when the user prefers to view a picture already taken by the camera system 70, the storage device 36 of FIG. 3 is designed to transmit data signals defining a picture to the display device 39. In response, the display device 39 is designed to use the signals transmitted from the storage device 36 instead of the signals transmitted directly from the conversion device 34 to produce an image. Light from this image is reflected by the beam splitter 85 and is received by lens 27. As a result, the user may view the image of the picture defined by the data transmitted from storage device 36 by looking through lens 27.

In addition, an image of the light received by lens 25 may be superimposed with the image produced by the display device 39, if desired. In this regard, the display device 39 is configured to produce an image based on signals received from either the conversion device 34 or the storage device 36, as described hereinabove. However, in addition, the shutter 87 is placed into an open position. Therefore, at least a portion of the light received by the lens 25 passes through the beam splitter 85 toward lens 27, and at least a portion of the light produced by the display device 39 is simultaneously reflected off of the beam splitter 85 toward lens 27. Therefore, by looking through the lens 27, the user sees the image produced by the display device 39 superimposed with the image of the light passing through beam splitter 85.

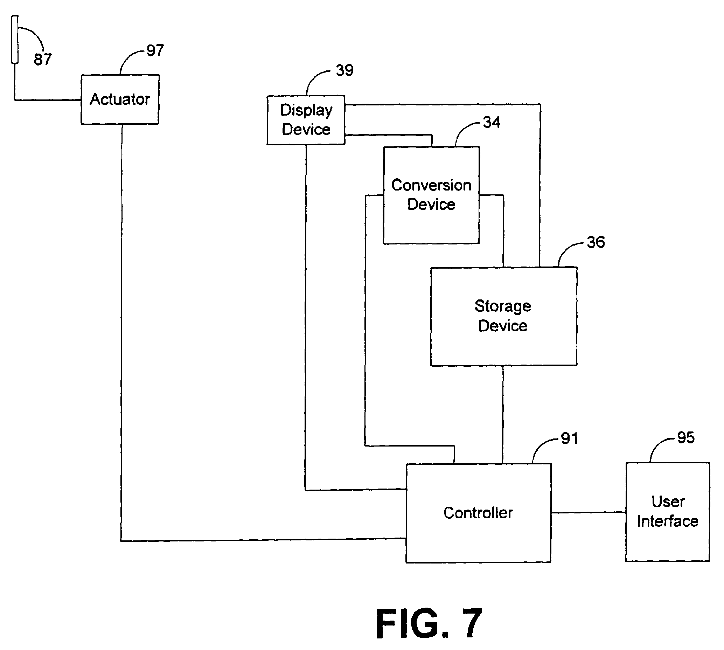

A controller 91, such as a digital signal processor, for example, is preferably used to control the operation of the system 70, as shown by FIG. 7. In this regard, a user interface 95 is preferably coupled to the controller 91. The interface 95 preferably includes buttons, switches or other mechanisms that allow the user to provide the controller 91 with inputs. Therefore, the user may provide inputs via interface 95 indicating a desire to see light received from lens 25 and not from display device 39.

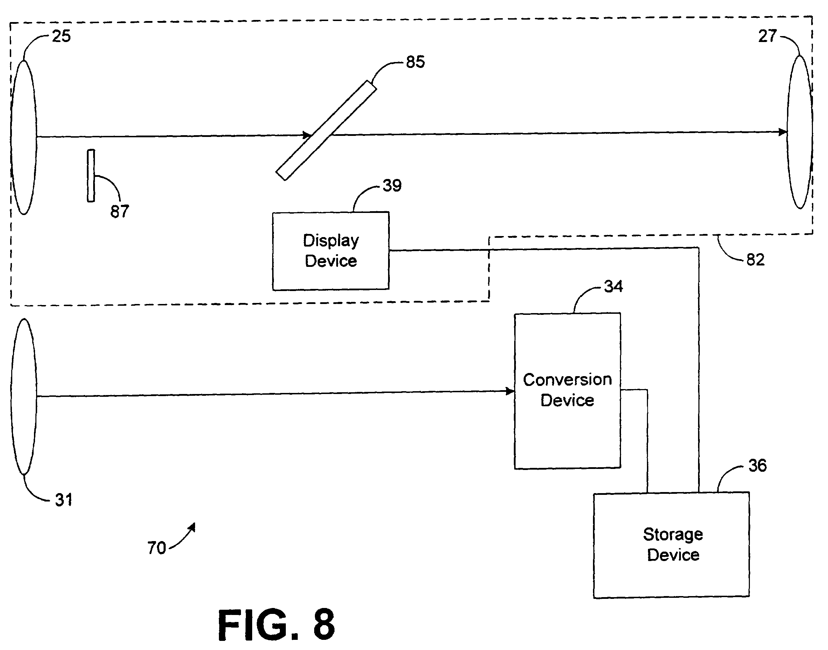

In response, the controller 91 transmits control signals to conversion device 34 and storage device 36 instructing the conversion device 34 and storage device 36 to refrain from transmitting data to the display device 39. Alternatively, the controller 91 can be configured to transmit a control signal to the display device 39 instructing the display device 39 to refrain from producing an image. In either case, the display device 39 fails to produce an image, as shown by FIG. 8.

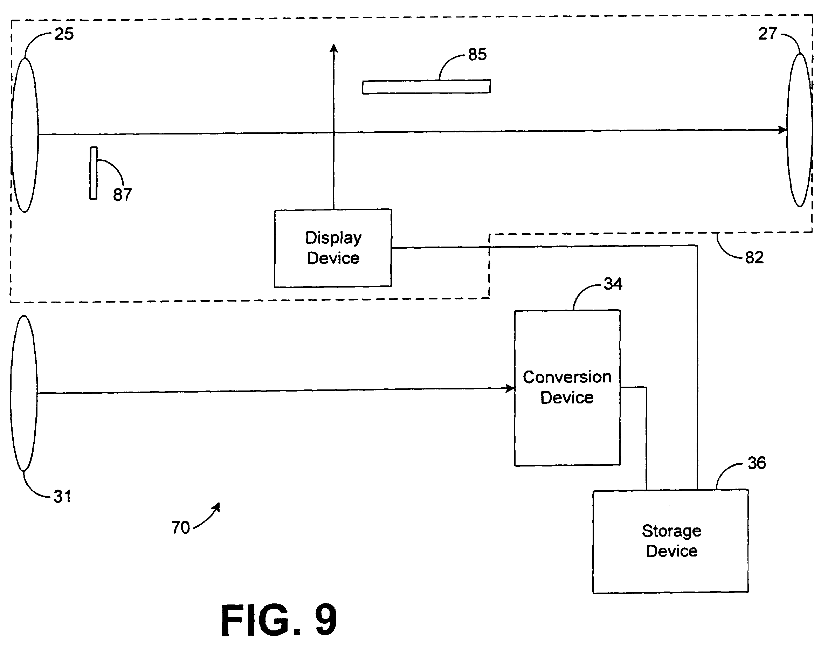

The controller 91 also transmits a control signal to an actuator 97 (FIG. 7) coupled to shutter 87. In response to this control signal, the actuator 97 moves the shutter 87, if necessary, to place the shutter 87 in an open position. Therefore, light from the lens 25 (FIG. 8) travels past the shutter 87 and is incident on the lens 27. In the preferred embodiment, the light is received by the beam splitter 85 and passes through the beam splitter 85 before being received by lens 27. However, in an alternative embodiment, it is possible for the beam splitter 85 to be rotated or otherwise repositioned such that light from the lens 25 travels directly to the lens 27, as shown by FIG. 9. In any event, at least a portion of the light from lens 25 is received by the lens 27, and by looking through the lens 27, the user is able to see an image defined by the light passing through lens 25.

The user may also provide inputs via interface 95 indicating a desire to view an electronic image of the scene currently viewed by the lens 31 using the display device 39 instead of viewing light passing through the lens 25. In response, the controller 91 transmits a control signal to actuator 97 instructing the actuator 97 to move the shutter 87 into a closed position. Therefore, light from the lens 25 is blocked by the shutter 87 and is not incident on the lens 27. Furthermore, the controller 91 also transmits a control signal to conversion device 34 instructing the conversion device 34 to transmit signals defining the image of the light received by conversion device 34 to display device 39. As a result, the display device 39 produces an image based on these signals. This image is transmitted to beam splitter 85, which directs the image (*i*.*e*., reflects the image in the preferred embodiment) toward lens 27. Therefore, the user can view the image produced by the display device 39 by looking through the lens 27.

The user may also provide inputs via interface 95 indicating a desire to see an image of a picture already taken instead of the image currently viewed by the lens 31. In response, the controller 91 transmits a control signal to actuator 97 instructing the actuator 97 to move the shutter 87 into a closed position. Therefore, the light from lens 25 is blocked by shutter 87, and the user is unable to see the light passing through lens 25 when looking through lens 27. The controller 91 also transmits a control signal to storage device 36 instructing the storage device 36 to transmit signals defining the picture to be displayed by the display device 39. The display device 39 receives these signals and produces an image based on these signals. This image is directed toward the lens 27 by the beam splitter 85, and the user can view the image produced by the display device 39 by looking through the lens 27.

In addition, the user may also provide inputs via interface 95 indicating a desire to see an image of the light received by lens 25 superimposed with the image produced by the display device 39. In response, the controller 91 is configured to transmit control signals as described hereinabove to cause the display device 39 to produce an image based on signals received either from the conversion device 34 or the storage device 36. However, in addition, the controller 91 also transmits a control signal to the actuator 97, as described hereinabove, to cause the actuator 97 to move the shutter 87 into an open position. As a result, light from the lens 25 travels past the shutter 87 and is directed toward the lens 27 by the beam splitter 85. Therefore, by looking through the lens 27, the user sees the image produced by the display device 39 superimposed with the image formed from the light passing through the lens 25.

It should be noted that other configurations may exist for the optical viewfinder 82 without departing from the principles of the present invention. In this regard, light can be manipulated in an infinite number of ways. The configuration of the system 70 can be changed such that the light described hereinabove can be reflected or refracted in different directions and any number of times without departing from the principles of the present invention. In fact, it may be desirable to incorporate other devices, such as prisms or mirrors, for example, to correctly orient the images produced by the optical viewfinder 82 for the user.

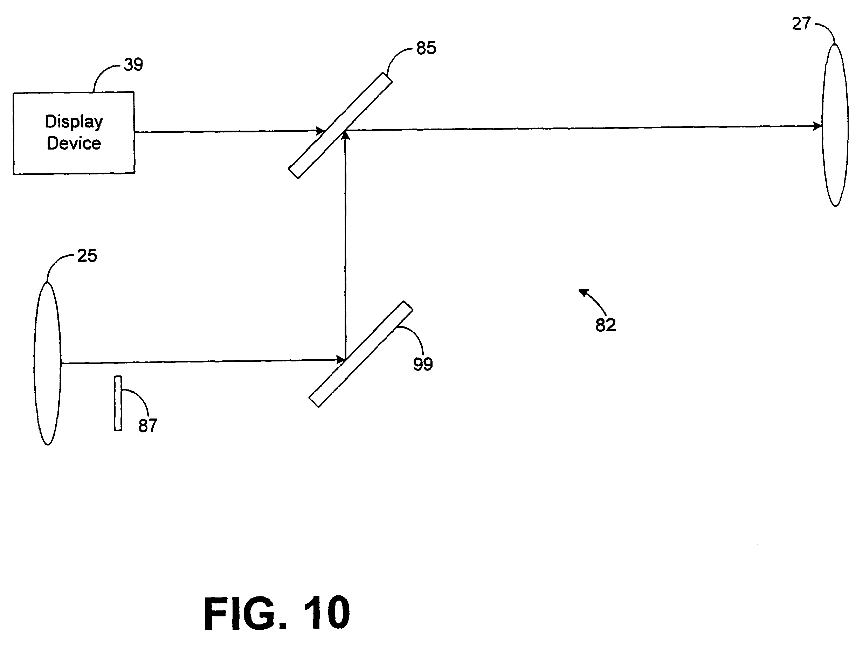

For example, FIG. 10 depicts another configuration of an optical viewfinder 82 that may be used to implement the principles of the present invention. As can be seen by referring to FIG. 10, a mirror 99 has been incorporated into the viewfinder 82 to reflect the light passing through lens 25. In this embodiment, the display device 39 is positioned relative to the beam splitter 85 and the lens 27 such that the images produced by the display device 39 pass through the beam splitter 85 instead of reflecting off of the beam splitter 85. Furthermore, the lens 25 is positioned such that the light passing through the lens 25 is reflected by the beam splitter 85 instead of passing through the beam splitter 85.

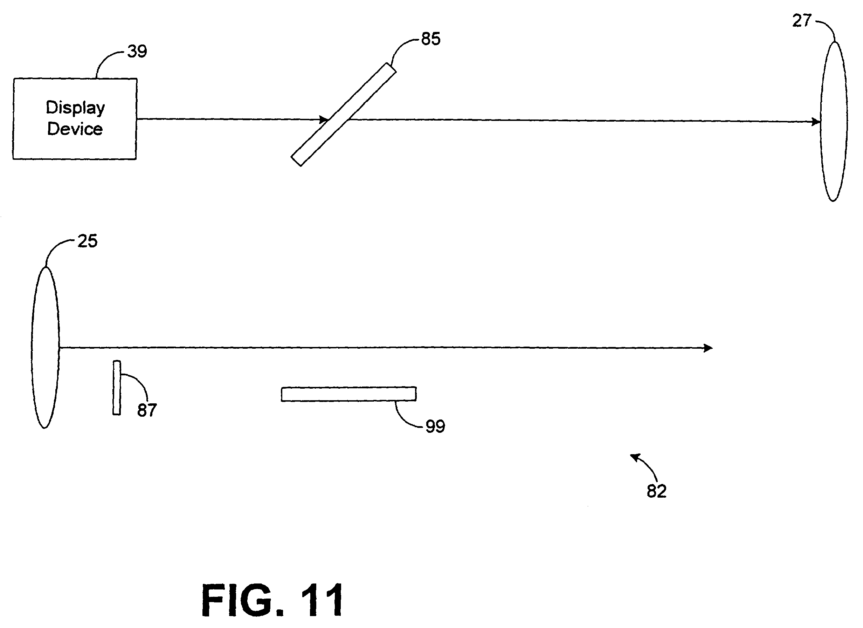

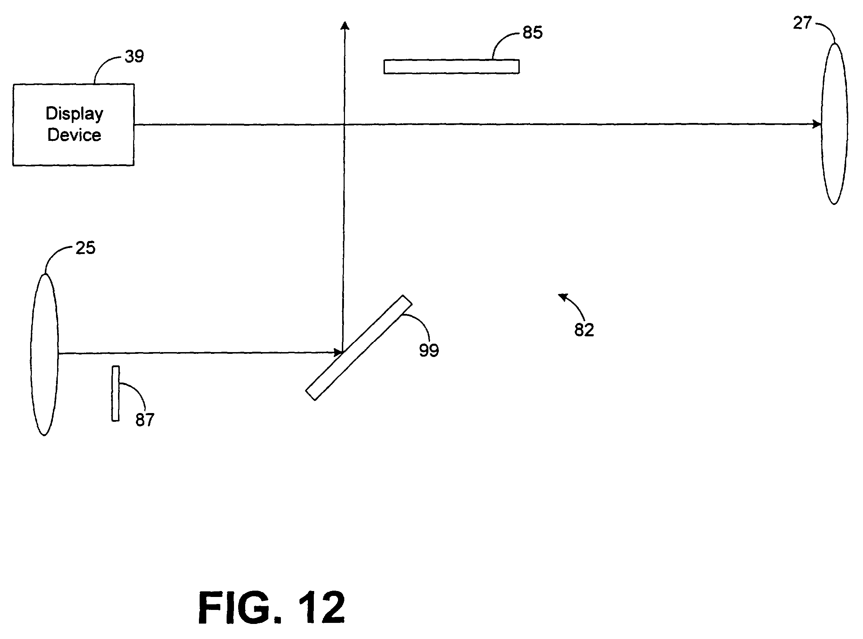

In addition, other techniques may be employed to control which images are visible by a user looking through the lens 27. For example, the mirror 99 can be rotated or otherwise moved, as shown by FIG. 11, such that light from the lens 25 is not reflected toward the beam splitter 85 to prevent the user from seeing light from the lens 25 when looking through the lens 27. Alternatively, the beam splitter 85 can be moved, as shown by FIGS. 9 and 12 to prevent light from either lens 25 or display device 39 from passing through lens 27.

Other examples of other configurations for the system 70 are shown in U.S. Patent Application (Attorney Docket No. 10971485) entitled "Digital Camera System and Method for Displaying Images of a Scene to a User Through an Optical Viewfinder," which was filed by Campbell on the same date as this application and which is incorporated herein by reference.

It should be further noted that lenses 25 and 27 are not necessary features of the present invention. Therefore, lenses 25 and/or 27 can be removed without departing from the principles of the present invention. In this regard, light passes through openings 88 and 89 regardless of whether the lenses 25 and/or 27 are positioned within the openings 88 and 89, respectively. Therefore, when the lens 25 is removed, the light described hereinabove as being received by lens 25 or as passing through lens 25 passes through opening 88 and is received by beam splitter 85, when appropriate. Furthermore, when the lens 27 is removed, the light described hereinabove as being received by lens 27 or as passing through lens 27 is visible to the user by looking through opening 89.

It should be emphasized that the above-described embodiments of the present invention, particularly, any "preferred" embodiments, are merely possible examples of implementations, merely set forth for a clear understanding of the principles of the invention. Many variations and modifications may be made to the above-described embodiment(s) of the invention without departing substantially from the spirit and principles of the invention. All such modifications and variations are intended to be included herein within the scope of the present invention.

## Claims

1. A digital camera system (70), comprising:
a housing (86) having a first opening;
a first lens (31);
a conversion device (34) configured to produce digital data based on light passing through said first lens (31);
a display device (39) configured to produce an image based on said digital data; and
a beam splitter (85) positioned within a path of travel of light passing through said first opening and positioned within a path of travel of light from said image.

2. The system (70) of claim 1, wherein said housing (86) has a second opening, and wherein said light passing through said first opening and said light from said image are incident on said beam splitter (85) and pass through said second opening.

3. The system (70) of claim 1, further comprising a means (87) for preventing said light passing through said first opening from being incident on said beam splitter (85).

4. A method for displaying images by a digital camera (70), comprising the steps of:
receiving light via a first opening in said digital camera (70);
receiving light via a lens (31) coupled to said digital camera (70);
defining an image in digital data based on said light received by said lens (31);
displaying said image based on said digital data;
transmitting said light received via said first opening through a second opening in said digital camera (70); and
transmitting light from said displayed image through said second opening.

5. The method of claim 4, further comprising the step of transmitting said light received via said first opening and said light from said displayed image to a beam splitter (85).

6. The method of claim 4, further comprising the step of superimposing said light received via said first opening with said light from said displayed image.

7. The method of claim 4, further comprising the steps of:
transmitting said light from said displayed image to a beam splitter (85); and
blocking said light received via said first opening.

8. A method for displaying images by a digital camera (70), comprising the steps of:
receiving light via a first opening in said digital camera (70);
receiving light via a lens (31) coupled to said digital camera (70);
defining an image in digital data based on said light received by said lens (31);
displaying said image based on said digital data;
transmitting said light received via said first opening to a beam splitter (85); and
transmitting said light from said displayed image to said beam splitter (85).

9. The method of claim 8, further comprising the step of superimposing said light received via said first opening with said light from said displayed image.

10. The method of claim 8, further comprising the steps of:
transmitting said light received via said first opening through a second opening in said digital camera (70); and
transmitting said light from said displayed image through said second opening.
